# EUROPEAN PATENT APPLICATION

(11) **EP 4 841 424 A1**
(43) Date of publication of application: **18.11.2026**
(21) Application number: 26177246.1
(22) Date of filing: 07.05.2026
(51) Int. Cl.: G06F 3/12, H04N 1/00

(54) **IMAGE FORMING APPARATUS**

(30) Priority: 13.05.2025 JP 2025080604
(71) Applicant: Oki Electric Industry Co., Ltd., Minato-ku Tokyo 105-8460 (JP)
(72) Inventor: SATO, Aika, Tokyo, 105-8460 (JP)
(74) Representative: Betten & Resch

(57) **Abstract**

The image forming apparatus (2) is a device (2) capable of wirelessly communicating with a terminal (6) via a first wireless path or a second wireless path. The image forming apparatus (2) includes a generation unit (32) configured to generate first device information obtained by excluding, from device information of the image forming apparatus (2), first interface information that is interface information of a network used in first wireless communication that is wireless communication via the first wireless path and not used in second wireless communication that is wireless communication via the second wireless path, when a communication request is received from the terminal (6) in a state in which the second wireless communication is set to be enabled, and configured to generate the device information of the image forming apparatus (2) including the first interface information, as second device information, when a communication request is received from the terminal (6) in a state in which the second wireless communication via the second wireless path is set to be disabled, and a transmission unit (42) configured to transmit the first device information or the second device information to the terminal (6).

## Description

### BACKGROUND OF THE INVENTION

### 1. Field of the Invention

The present disclosure relates to an image forming apparatus, for example, an image forming apparatus capable of communicating with an external terminal using a Wi-Fi Direct function.

### 2. Description of the Related Art

Conventionally, there has been a system in which an image forming apparatus and a mobile terminal are connected via Wi-Fi Direct (registered trademark) and communicate with each other (see Patent Document 1, for example).

Patent Document 1 is Japanese Patent Application Publication No. 2022-115587.

In such an image forming apparatus, it is desirable to prevent unnecessary information from being transmitted from the image forming apparatus to the mobile terminal, when wireless communication via a Wi-Fi Direct communication path serving as a second wireless path is set to be enabled.

### SUMMARY OF THE INVENTION

The present disclosure has been made in view of the foregoing, and an object of the present disclosure is to provide an image forming apparatus that prevents unnecessary information from being transmitted when wireless communication via a second wireless path is set to be enabled.

An image forming apparatus of the present disclosure is an apparatus capable of wirelessly communicating with a terminal via a first wireless path or a second wireless path. The image forming apparatus includes a generation unit configured to generate first device information that is obtained by excluding, from device information of the image forming apparatus, first interface information of a network used in first wireless communication that is wireless communication via the first wireless path and not used in second wireless communication that is wireless communication via the second wireless path, when a communication request is received from the terminal in a state in which the second wireless communication is set to be enabled, and configured to generate second device information that is the device information of the image forming apparatus including the first interface information, when the communication request is received from the terminal in a state in which the second wireless communication via the second wireless path is set to be disabled; and a transmission unit configured to transmit the first device information or the second device information to the terminal.

The present disclosure makes it possible to prevent from responding with interface information of a network interface that is not used when wireless communication via a second wireless path is set to be enabled.

According to the present disclosure, it is possible to prevent from responding with interface information of a network interface that is not used when wireless communication via a second wireless path is set to be enabled. Accordingly, the present disclosure can realize an image forming apparatus that prevents transmission of unnecessary information when wireless communication via the second wireless path is set to be enabled.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a block diagram showing a configuration of a printing system according to embodiments;
FIG. 2 is a block diagram showing a hardware configuration of an image forming apparatus according to the embodiments;
FIG. 3 is a block diagram showing a software configuration of the image forming apparatus according to the embodiments;
FIG. 4 is a flowchart showing procedure of MIB information response processing;
FIG. 5A and FIG. 5B are diagrams showing index tables, FIG. 5A shows the index table in a case in which a Wi-Fi Direct function is disabled, and FIG. 5B shows the index table in a case in which the Wi-Fi Direct function is enabled;
FIG. 6 is a sequence chart showing a connection process in a state in which automatic connection is disabled; and
FIG. 7 is a sequence chart showing a connection process in a state in which automatic connection is enabled.

### DETAILED DESCRIPTION OF THE INVENTION

A mode for carrying out the present invention (hereinafter referred to as an "embodiment") will now be described with reference to the attached drawings. Further scope of applicability of the present invention will become apparent from the detailed description given hereinafter. However, it should be understood that the detailed description and specific examples, while indicating embodiments of the present invention, are given by way of illustration only, and various changes and modifications will become apparent to those skilled in the art from the detailed description.

### [1. First Embodiment]

### [1-1. Configuration of Printing System]

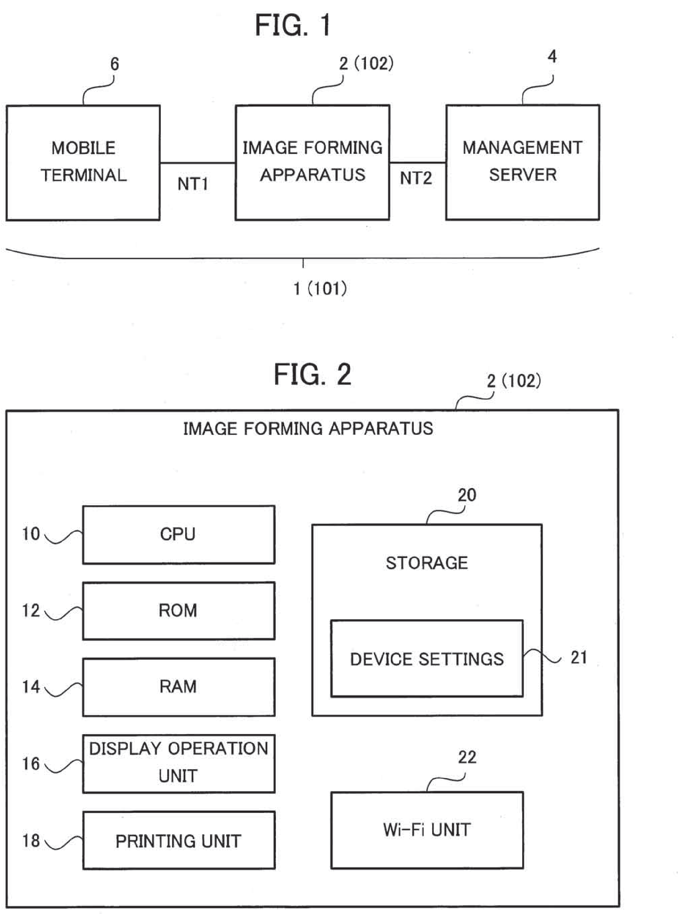

FIG. 1 shows a configuration of a printing system 1 according to a first embodiment. As shown in FIG. 1, the printing system 1 includes a plurality of devices installed within one company, for example. The printing system 1 includes an image forming apparatus 2, a management server 4, and a mobile terminal 6. The image forming apparatus 2 and the mobile terminal 6 are communicably connected to each other, via a network NT1 that is a wireless in-house LAN (Local Area Network) based on Wi-Fi (registered trademark) serving as a wireless network. The image forming apparatus 2 and the management server 4 are communicably connected to each other, via a network NT2 that is a wireless in-house LAN or a wired in-house LAN. Incidentally, in Wi-Fi (registered trademark), there exist at least an infrastructure mode (access point communication) and a P2P (Peer-to-Peer) mode. Communication in the infrastructure mode is a communication method in which terminals on a wireless LAN communicate with each other via a wireless LAN access point. Communication in the P2P mode is a communication method in which terminals connect directly with each other without using a wireless LAN access point, establish a local wireless network, and communicate with each other. Further, in the P2P mode, there exist an ad hoc mode (ad hoc communication) and Wi-Fi Direct, for example.

The image forming apparatus 2 is a printer, for example. When the image forming apparatus 2 communicates with the mobile terminal 6 via the network NT1 and receives a print job from the mobile terminal 6, the image forming apparatus 2 prints print data indicated by the print job on a predetermined sheet (print medium). The image forming apparatus 2 is a terminal capable of communication via Wi-Fi Direct (registered trademark) (hereinafter also referred to as a 'Wi-Fi Direct compatible terminal').

The management server 4 is a terminal that monitors the status of the image forming apparatus 2. Specifically, the management server 4 transmits, for example, an MIB acquisition request to the image forming apparatus 2, then acquires MIB information in response thereto from the image forming apparatus 2, and performs, based on the MIB information, individual identification of the image forming apparatus 2 or monitoring of the status of the image forming apparatus 2, or both. MIB (Management Information Base) refers to a set of data in which a device to be monitored collects its own settings and status, and is used for remotely monitoring and managing the device over a network.

In network device management by the management server 4 using MIB information, when Wi-Fi Direct is set to be enabled in the image forming apparatus 2, the number of virtual network interfaces in the image forming apparatus 2 increases compared with that in the infrastructure mode (details will be described later), and therefore the amount of information managed by the management server 4 usually increases. Accordingly, if the management server 4 has not anticipated the increase in virtual network interfaces due to Wi-Fi Direct, additional measures are required on the management server 4.

The mobile terminal 6 is, for example, a portable device such as a smartphone, and is held and carried by a user. The mobile terminal 6 transmits a print job to the image forming apparatus 2 to cause the image forming apparatus 2 to perform printing. The mobile terminal 6 is also collectively controlled by a control unit (not shown), and has a display operation unit configured by a touch panel (i.e., a display device and an operation device), for example. Further, the mobile terminal 6 is a Wi-Fi Direct compatible terminal.

### [1-2. Wi-Fi Direct]

Wi-Fi Direct is a type of communication in a P2P mode of a wireless LAN, and has a function of enabling Wi-Fi Direct compatible terminals to connect with each other without using a wireless LAN access point, thereby establishing a local wireless network and communicating with one another. In Wi-Fi Direct, a single terminal functions as an access point in software. Further, Wi-Fi Direct can be broadly classified into the following two states.

The first state is a state in which a Wi-Fi Direct compatible terminal (e.g., the image forming apparatus 2) uses a P2P Device function to detect another Wi-Fi Direct compatible terminal before establishing a local network (referred to as a P2P Group) using Wi-Fi Direct. When the image forming apparatus 2 operates using the P2P Device function, a P2P Device ID is assigned as a device identifier separately from a MAC address (Media Access Control address) as a hardware address used in the infrastructure mode for normal wireless LAN communication, and this P2P Device ID is used instead of the MAC address.

The second state is a state after the P2P Group is established. After the P2P Group is established, the Wi-Fi Direct compatible terminal (e.g., the image forming apparatus 2) holds a P2P Group ID separately from the P2P Device ID mentioned above, and uses the P2P Group ID instead of the MAC address for communication between P2P Groups. As long as the terminal acting as an access point within the P2P Group does not exceed its connection limit, this terminal can normally accept joining of a P2P Device even after the P2P Group is established. The terminal that has established the P2P Group communicates, using the P2P Device ID, with a P2P Device that has not yet joined the P2P Group, while the terminal needs to communicate, using the P2P Group ID, with a terminal that has already joined the P2P Group. In other words, after the P2P Group is established, the terminal holds both the P2P Device ID and the P2P Group ID, and needs to selectively use the MAC address depending on the terminal with which it communicates.

Based on the above, a Wi-Fi Direct compatible terminal has three addresses as MAC addresses: the hardware address used for normal wireless LAN communication (i.e., infrastructure-mode communication), the P2P Device ID used when Wi-Fi Direct is enabled, and the P2P Group ID. To manage these addresses, a Wi-Fi Direct compatible terminal may create virtual network interfaces, and assign each of the addresses to them.

### [1-3. Configuration of Image forming apparatus]

### [1-3-1. Hardware configuration of image forming apparatus]

FIG. 2 shows a hardware configuration of the image forming apparatus 2 according to the first embodiment. As shown in FIG. 2, the image forming apparatus 2 includes, as the hardware configuration, a CPU (Central Processing Unit) 10 as a processor (processing circuit), a ROM (Read Only Memory) 12 as a storage device, a RAM (Random Access Memory) 14 as a volatile storage device, a display operation unit 16, a printing unit 18, a storage 20 as a storage device, and a Wi-Fi unit 22 as a wireless communication unit. The CPU 10 collectively controls the image forming apparatus 2 by reading a predetermined program from the ROM 12 and expanding it in the RAM 14. The display operation unit 16 is configured by a touch panel, for example, and has a function as a display device for outputting information to a user, as well as a function as a user operation unit for acquiring operation input from the user, for example, for changing the settings of the image forming apparatus 2.

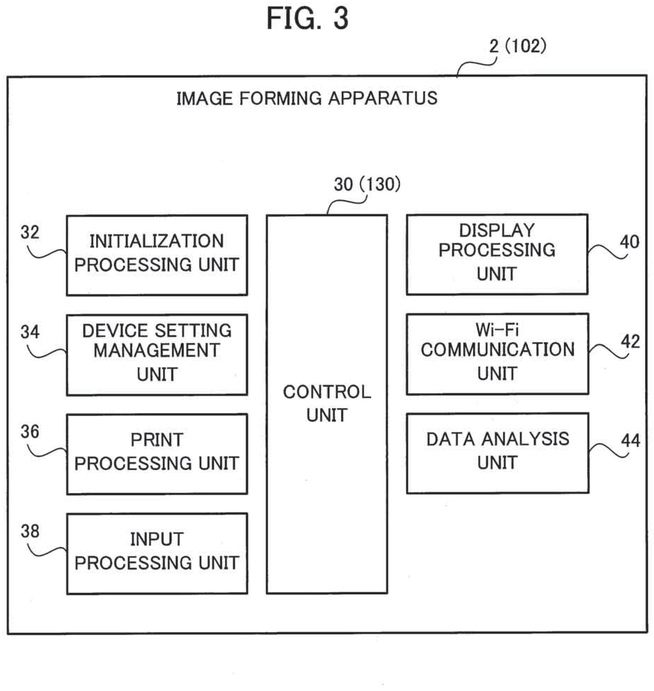

The printing unit 18 includes a paper conveying mechanism and a toner fixing mechanism. The printing unit 18 conveys a paper sheet loaded in a paper feed tray, and prints an image on the paper sheet, under the control of a print processing unit (a print processing unit 36 in FIG. 3 described later). The storage 20 is a non-volatile memory device, such as an HDD (Hard Disk Drive) or an SSD (Solid State Drive), and stores device settings 21. The device settings 21 store various setting values of the image forming apparatus 2, such as whether the Wi-Fi Direct function is set to be enabled or disabled. The Wi-Fi unit 22 performs wireless communication with an external device of the image forming apparatus 2, under the control of a Wi-Fi communication unit (a Wi-Fi communication unit 42 in FIG. 3 described later).

### [1-3-2. Software configuration of Image forming apparatus]

FIG. 3 shows a software configuration of the image forming apparatus 2. As shown in FIG. 3, the image forming apparatus 2 includes, as software configuration, a control unit 30, an initialization processing unit 32 as a generation unit, a device setting management unit 34, the print processing unit 36, an input processing unit 38, a display processing unit 40, the Wi-Fi communication unit 42 as a transmission unit, and a data analysis unit 44. The control unit 30 includes the CPU 10, the ROM 12, and the RAM 14 (FIG. 2), and reads a predetermined program from the ROM 12 (FIG. 2) to collectively control the image forming apparatus 2. The initialization processing unit 32 performs initialization processing, when the image forming apparatus 2 is activated. The control unit 30 can be implemented by reading the program from the ROM 12, extending the program in the RAM 14, and executing the program by the CPU 10. The initialization processing unit 32 performs initialization processing, when the image forming apparatus 2 is activated.

The device setting management unit 34 performs various settings of the image forming apparatus 2 based on operation input to the display operation unit 16, information transmitted from an external device and the like, and stores setting values in the device settings 21 of the storage 20 (FIG. 2). The print processing unit 36 analyzes a print job transmitted from an external device, such as the mobile terminal 6, a PC (Personal Computer) or the like, and controls the printing unit 18 (FIG. 2) to print an image on a paper sheet (i.e., performs print processing).

The input processing unit 38 analyzes operation input from the user to the display operation unit 16 (FIG. 2). The display processing unit 40 causes the display operation unit 16 (FIG. 2) to display various types of information. The Wi-Fi communication unit 42 performs wireless communication with the external device of the image forming apparatus 2, by controlling the Wi-Fi unit 22 (FIG. 2). The data analysis unit 44 analyzes various types of data received from the external device. Each of the components shown in FIG. 2 may be formed by processing circuitry i.e., electric circuits such as integrated circuits.

### [1-4. MIB information response process]

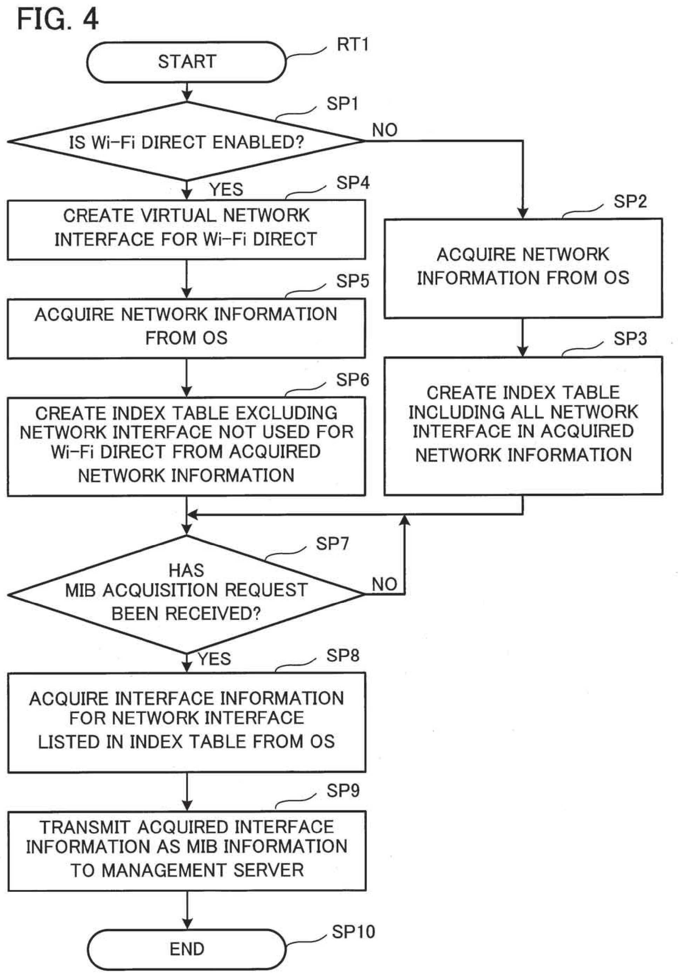

Next, an MIB information response process that is a process in which the image forming apparatus 2 responds with MIB information to an MIB acquisition request received from the management server 4 will be described with reference to a flowchart shown in FIG. 4. When the image forming apparatus 2 is activated, the control unit 30 reads an MIB information response process program from the ROM 12 and executes the program, thereby starting an MIB information response processing procedure RT1 shown in FIG. 4, and the process proceeds to step SP1.

In step SP1, the control unit 30 causes the initialization processing unit 32 to read the device settings 21 stored in the storage 20 during a startup initialization process, and determines whether the Wi-Fi Direct function is enabled or not. If a negative result is obtained here, this indicates that the Wi-Fi Direct function is disabled, and no virtual network interface for Wi-Fi Direct will be created. Then, the control unit 30 proceeds to step SP2. In step SP2, the control unit 30 causes the initialization processing unit 32 to acquire network information of the image forming apparatus 2 from an OS (Operating System), and then the process proceeds to step SP3. This network information includes information indicating three network interfaces whose network interface names are "lo," "eth0," and "wlan0," used in the infrastructure mode.

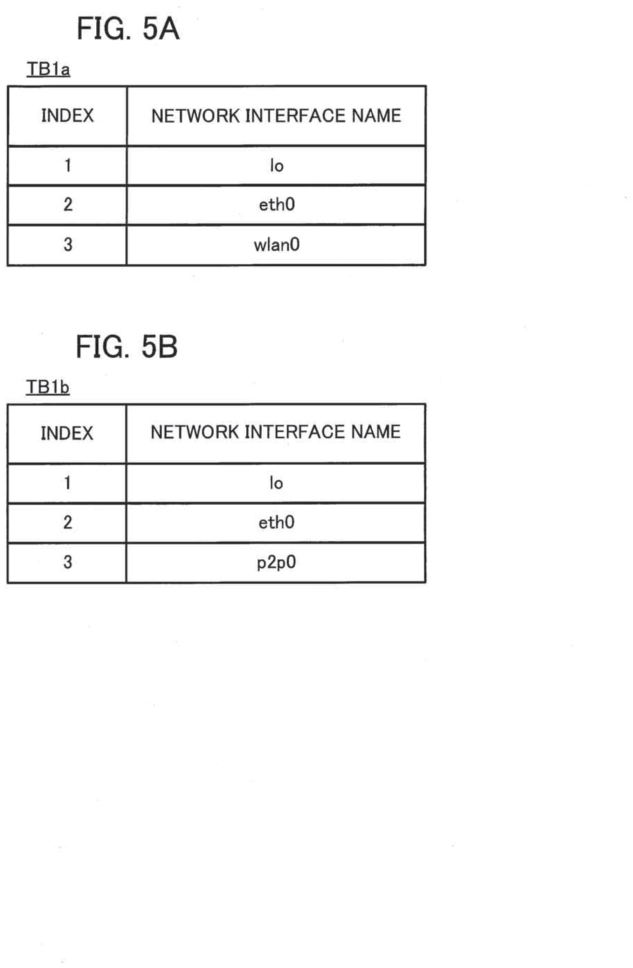

In step SP3, the control unit 30 causes the initialization processing unit 32 to create an index table TB1a shown in FIG. 5A, thereby completing the initialization process, and then proceeds to step SP7. The index table TB1a lists three network interfaces "lo," "eth0," and "wlan0," and includes all network interfaces contained in the network information acquired in step SP2, without omission.

On the other hand, if an affirmative result is obtained in step SP1, this indicates that the Wi-Fi Direct function is enabled and a virtual network interface for Wi-Fi Direct will thus be created. Then, the control unit 30 proceeds to step SP4. In step SP4, the control unit 30 causes the initialization processing unit 32 to create a virtual network interface used for the Wi-Fi Direct function, and then proceeds to step SP5. At this time, the initialization processing unit 32 creates, for example, a virtual network interface whose network interface name is "p2p0." Here, the network interface whose network interface name is "wlan0" (FIG. 5A) is used in the infrastructure mode, but is not used in the Wi-Fi Direct function.

In step SP5, the control unit 30 causes the initialization processing unit 32 to acquire network information of the image forming apparatus 2 from the OS, and then proceeds to step SP6. This network information includes information indicating the three network interfaces having the network interface names "lo," "eth0," and "wlan0," which are used in the infrastructure mode, and information indicating one network interface having the network interface name "p2p0," which is used for Wi-Fi Direct.

In step SP6, the control unit 30 causes the initialization processing unit 32 to create an index table TB1b shown in FIG. 5B, thereby completing the initialization process, and then proceeds to step SP7. The index table TB1b lists three network interfaces, namely, "lo," "eth0," and "p2p0." Thus, the index table TB1b includes the virtual network interface "p2p0," which is used in the Wi-Fi Direct function, and excludes the network interface "wlan0," which is not used in the Wi-Fi Direct function, among all of the network interfaces (i.e., "lo," "eth0," "wlan0," and "p2p0") contained in the network information acquired in step SP5. Hereinafter, the index tables TB1a and TB1b may be collectively referred to as an index table TB1.

In step SP7, the control unit 30 waits until receiving an MIB acquisition request from the management server 4. Upon receiving the MIB acquisition request, the control unit 30 proceeds to step SP8. In step SP8, the control unit 30 acquires, from the OS, interface information relating to the network interfaces listed in the index table TB1 based on the index table TB1 (i.e., based on the index table TB1a when the Wi-Fi Direct function is disabled, and based on the index table TB1b when the Wi-Fi Direct function is enabled), and then the process proceeds to step SP9. Accordingly, when the Wi-Fi Direct function is disabled, the control unit 30 acquires, from the OS, interface information relating to the network interfaces "lo," "eth0," and "wlan0" listed in the index table TB1a. On the other hand, when the Wi-Fi Direct function is enabled, the control unit 30 acquires, from the OS, interface information relating to the network interfaces "lo," "eth0," and "p2p0" listed in the index table TB1b (FIG. 5B).

In step SP9, the control unit 30 causes the Wi-Fi communication unit 42 to transmit the interface information acquired from the OS, as MIB information, to the management server 4. The process then proceeds to step SP10, thereby completing the MIB information response processing procedure RT1.

### [1-5. Advantages and the like]

In the above configuration, when the image forming apparatus 2 receives an MIB acquisition request from the mobile terminal 6, which is a Wi-Fi Direct compatible terminal, and the Wi-Fi Direct function is set to be disabled in the image forming apparatus 2, the image forming apparatus 2 generates MIB information of the image forming apparatus 2 including interface information of a network used in wireless communication via the infrastructure mode communication path but not used in wireless communication via the Wi-Fi Direct communication path (i.e., interface information of the network interface "wlan0"), and responds to the mobile terminal 6.

On the other hand, when the image forming apparatus 2 receives an MIB acquisition request from the mobile terminal 6, which is a Wi-Fi Direct compatible terminal, and the Wi-Fi Direct function is set to be enabled in the image forming apparatus 2, the image forming apparatus 2 generates MIB information excluding interface information of a network used in wireless communication via the infrastructure mode communication path but not used in wireless communication via the Wi-Fi Direct communication path (i.e., interface information of the network interface "wlan0"), and responds to the mobile terminal 6.

Accordingly, when the image forming apparatus 2 receives an MIB acquisition request from the mobile terminal 6 and the Wi-Fi Direct function is set to be enabled, it is possible to prevent responding to the mobile terminal 6 with interface information of a network interface used in wireless communication via the infrastructure mode communication path, which is unnecessary information not used when the Wi-Fi Direct function is set to be enabled. Thus, the image forming apparatus 2 is configured to select information transmitted in response to the mobile terminal 6 depending on whether the Wi-Fi Direct function is set to be disabled or enabled, and respond only with interface information of the network interface currently in use.

Therefore, the image forming apparatus 2 can reduce the amount of data in information transmitted in response to the mobile terminal 6. At the same time, the image forming apparatus 2 can prevent the mobile terminal 6 from performing unnecessary operations, such as attempting to connect to a network interface that was used when the Wi-Fi Direct function was set to be disabled but is no longer used when the Wi-Fi Direct function is set to be enabled.

Further, the image forming apparatus 2 can reduce an influence on a system constructed using a utility or MIB information designed without assuming an increase in the number of wireless LAN network interfaces. Furthermore, when an image forming apparatus that does not support the Wi-Fi Direct function and the image forming apparatus 2 that supports the Wi-Fi Direct function are installed in the same company but belong to different internal systems, for example, the image forming apparatus 2 can prevent the settings by an administrator from becoming complicated.

According to the above configuration, the image forming apparatus 2 is a device capable of wireless communication with the mobile terminal 6 as a terminal, via an infrastructure mode communication path as a first wireless path or a Wi-Fi Direct communication path as a second wireless path. The image forming apparatus 2 includes the initialization processing unit 32 configured to generate MIB information as device information of the image forming apparatus 2 excluding interface information of a network used in wireless communication via the infrastructure mode communication path but not used in wireless communication via the Wi-Fi Direct communication path (i.e., interface information of the network interface "wlan0"), when an MIB acquisition request as a communication request is received from the mobile terminal 6 in a state in which wireless communication via the Wi-Fi Direct communication path is set to be enabled, and generate MIB information of the image forming apparatus 2 including interface information of a network used in wireless communication via the infrastructure mode communication path but not used in wireless communication via the Wi-Fi Direct communication path (i.e., interface information of the network interface "wlan0"), when an MIB acquisition request is received from the mobile terminal 6 in a state in which wireless communication via the Wi-Fi Direct communication path is set to be disabled, and the image forming apparatus 2 includes the Wi-Fi communication unit 42 configured to transmit the MIB information to the mobile terminal 6.

In other words, the image forming apparatus 2 is configured to be capable of wirelessly communicating with the mobile terminal 6 via a first wireless path or a second wireless path. The image forming apparatus 2 includes the initialization processing unit 32 as the generation unit and the Wi-Fi communication unit 42 as the transmission unit.

When a communication request (e.g., MIB acquisition request ) is received from the mobile terminal 6 in a state in which second wireless communication (e.g., Wi-Fi direct that is wireless communication via the second wireless path) is set to be enabled (YES in step SP1), the initialization processing unit 32 generates first device information (e.g., the index table TB1b) obtained by excluding, from device information (e.g., the network information from OS) of the image forming apparatus 2, first interface information (e.g., interface information of the network interface "wlan0") that is interface information of a network used in first wireless communication that is wireless communication via the first wireless path and not used in the second wireless communication (steps SP4-SP6).

When the communication request (e.g., MIB acquisition request) is received from the mobile terminal 6 in a state in which the second wireless communication (e.g., Wi-Fi direct) via the second wireless path is set to be disabled (NO in step SP1), the initialization processing unit 32 generates second device information that is the device information of the image forming apparatus 2 including the first interface information (e.g., "lo," "eth0," and "wlan0" in the index table TB1a) (steps SP2 and SP3).

The transmission unit 42 is configured to transmit the first device information or the second device information to the mobile terminal 6 (step SP9).

Therefore, the image forming apparatus 2 can prevent responding with interface information of a network interface that is not used when wireless communication via the Wi-Fi Direct communication path as the second wireless path is set to be enabled.

### [2. Second Embodiment]

### [2-1. Configuration of printing system]

As shown in FIG. 1 and FIG. 2, a printing system 101 according to a second embodiment differs from the printing system 1 according to the first embodiment in that it includes an image forming apparatus 102 instead of the image forming apparatus 2. In the other respects, the printing system 101 according to the second embodiment is the same as the printing system 1 according to the first embodiment.

### [2-2. Configuration of image forming apparatus]

As shown in FIG. 3, the image forming apparatus 102 according to the second embodiment differs from the image forming apparatus 2 according to the first embodiment in that it includes a control unit 130 instead of the control unit 30. In other respects, the image forming apparatus 102 according to the second embodiment is the same as the image forming apparatus 2 according to the first embodiment. Here, Wi-Fi Direct has, for example, an automatic connection function that enables the mobile terminal 6 to connect to the image forming apparatus 102 without entering a password.

### [2-3. Switching between automatic connection disabled state and automatic connection enabled state]

The image forming apparatus 102 is configured such that an automatic connection disabled state and an automatic connection enabled state in the image forming apparatus 102 can be switched based on a user operation on the display operation unit 16. The control unit 130 stores, in the device settings 21, whether the image forming apparatus 102 is currently set to the automatic connection disabled state or the automatic connection enabled state.

The automatic connection disabled state refers to a state in which upon receiving a connection request signal, which is a signal indicating a request to connect via Wi-Fi Direct from an external device (e.g., the mobile terminal 6), the image forming apparatus displays on the display operation unit 16 whether to permit connection to the mobile terminal 6 or not and allows a user to select, and if the connection is permitted, the image forming apparatus connects to the mobile terminal 6 via Wi-Fi Direct using the automatic connection function. The automatic connection enabled state refers to a state in which upon receiving a connection request signal from the mobile terminal 6, the image forming apparatus automatically connects to the mobile terminal 6 via Wi-Fi Direct using the automatic connection function, without displaying on the display operation unit 16 whether to permit connection to the mobile terminal 6 or not.

### [2-4. Automatic connection process via Wi-Fi Direct using automatic connection function]

The following describes a connection procedure RT101 in the automatic connection disabled state, which is a Wi-Fi Direct connection process using the automatic connection function when automatic connection is disabled, and a connection procedure RT102 in the automatic connection enabled state, which is a Wi-Fi Direct connection process using the automatic connection function when automatic connection is enabled.

### [2-4-1. Connection process in automatic connection disabled state]

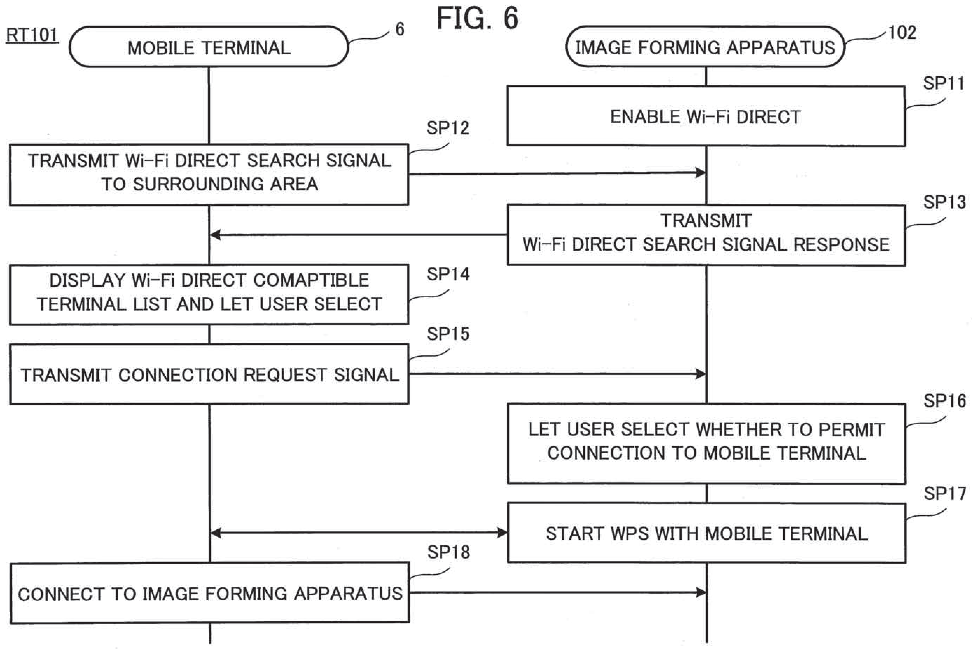

First, the connection procedure RT101 in the automatic connection disabled state in the printing system 101 will be described with reference to the sequence chart shown in FIG. 6. In step SP11, the control unit 130 of the image forming apparatus 102 enables the Wi-Fi Direct function in the image forming apparatus 102 based on a user operation performed on the display operation unit 16. At the time, the control unit 130 designates the image forming apparatus 102 as the Group Owner, and establishes a P2P Group.

In step SP12, the control unit of the mobile terminal 6 executes a Wi-Fi Direct compatible terminal search process, which is a process for searching for a Wi-Fi Direct compatible terminal based on a user operation performed on the display operation unit of the mobile terminal 6, and then the control unit of the mobile terminal 6 transmits a Wi-Fi Direct search signal, which is a signal for searching for a Wi-Fi Direct compatible terminal, to the surrounding area.

Upon receiving the Wi-Fi Direct search signal, the control unit 130 of the image forming apparatus 102 transmits a Wi-Fi Direct search signal response, which is a response to the Wi-Fi Direct search signal, to the mobile terminal 6, in step SP13.

In step SP14, the control unit of the mobile terminal 6 displays, on the display operation unit of the mobile terminal 6, a list of devices that have transmitted a Wi-Fi Direct search signal response (i.e., Wi-Fi Direct compatible terminals) including the image forming apparatus 102, allows the user to select a terminal from the list of the Wi-Fi Direct compatible terminals, and then proceeds to step SP15. In step SP15, the control unit of the mobile terminal 6 transmits a connection request signal, which is a signal indicating a request for connection, to the terminal selected by the user (assumed to be the image forming apparatus 102 in the second embodiment).

At the time, since the image forming apparatus 102 is set to the automatic connection disabled state, upon receiving the connection request signal from the mobile terminal 6, in step SP16, the control unit 130 of the image forming apparatus 102 displays on the display operation unit 16 whether to permit connection to the mobile terminal 6 or not, allows the user to select, and then proceeds to step SP17. When the user permits the connection between the image forming apparatus 102 and the mobile terminal 6, the control unit 130 starts WPS (Wi-Fi Protected Setup) (registered trademark) with the mobile terminal 6 for which the connection has been permitted, and exchanges information necessary for the connection with the mobile terminal 6 in step SP17. On the other hand, when the user does not permit the connection between the image forming apparatus 102 and the mobile terminal 6 in step SP16, the control unit 130 completes the connection processing procedure RT101 in the automatic connection disabled state.

In step SP18, the control unit of the mobile terminal 6 connects to the image forming apparatus 102 based on the information acquired via WPS, and starts communication with the image forming apparatus 102.

### [2-4-2. Connection process in automatic connection enabled state]

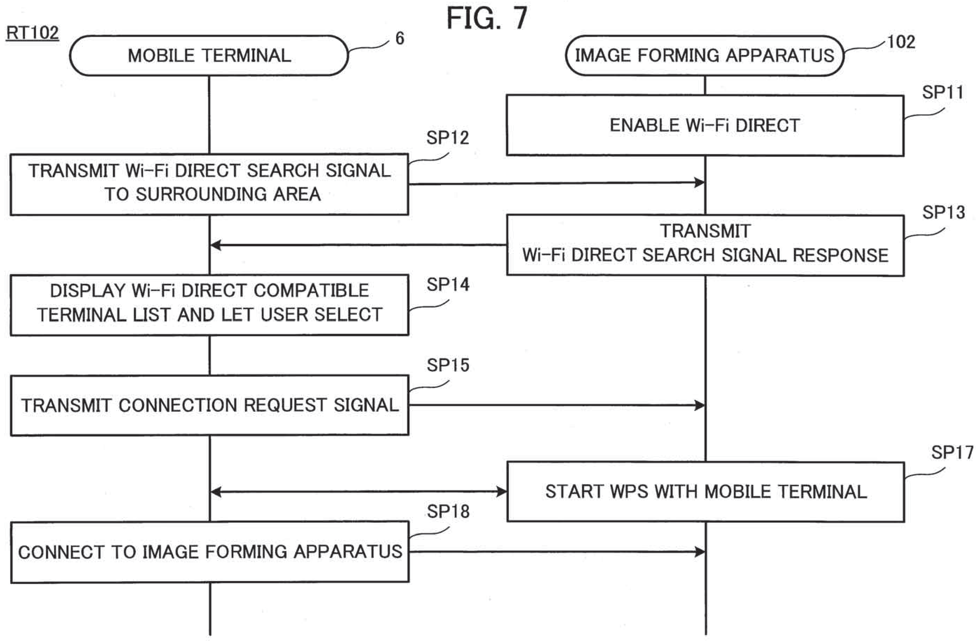

Next, the connection procedure RT102 in the automatic connection enabled state in the printing system 101 will be described with reference to the sequence chart shown in FIG. 7. In FIG. 7, the same reference numerals are assigned to steps corresponding to those in FIG. 6. In steps SP11 to SP15, the control unit of the mobile terminal 6 and the control unit 130 of the image forming apparatus 102 perform processing similar to the connection procedure RT101 (FIG. 6) in the automatic connection disabled state, and then the process proceeds to step SP17.

At the time, since the image forming apparatus 102 is set to the automatic connection enabled state, upon receiving a connection request signal from the mobile terminal 6, the control unit 130 of the image forming apparatus 102 starts WPS with the mobile terminal 6 in step SP17 without displaying on the display operation unit 16 whether to permit connection to the mobile terminal 6 or not, and exchanges information necessary for the connection to the mobile terminal 6.

In step SP18, the control unit of the mobile terminal 6 connects to the image forming apparatus 102 based on the information acquired via WPS, and starts communication with the image forming apparatus 102.

### [2-5. Advantages and the like]

Here, by using the Wi-Fi Direct automatic connection function, the printing system 101 can cause the mobile terminal 6 to connect to the image forming apparatus 102 via Wi-Fi Direct, without requiring the user to enter a password on the mobile terminal 6. Therefore, user operations can be reduced, and convenience can be improved. However, in that case, the mobile terminal 6 may automatically connect to an unintended terminal, and security may be reduced.

In contrast, the image forming apparatus 102 is configured so that the automatic connection disabled state and the automatic connection enabled state can be switched based on a user operation on the display operation unit 16. Further, when the image forming apparatus 102 is set to the automatic connection disabled state, upon receiving a connection request signal from the mobile terminal 6 as an external device, the image forming apparatus 102 displays on the display operation unit 16 whether to permit connection to the mobile terminal 6 or not, thereby allowing the user to select, and if the connection is permitted, it connects to the mobile terminal 6 via Wi-Fi Direct. Therefore, when the image forming apparatus 102 is set to the automatic connection disabled state, the image forming apparatus 102 can prevent the mobile terminal 6 from inadvertently connecting automatically to an unintended terminal, thus maintaining security.

On the other hand, when the image forming apparatus 102 is set to the automatic connection enabled state, upon receiving a connection request signal from the mobile terminal 6, the image forming apparatus 102 automatically connects to the mobile terminal 6 via Wi-Fi Direct, without displaying on the display operation unit 16 whether to permit the connection to the mobile terminal 6 or not. Therefore, when the image forming apparatus 102 is set to the automatic connection enabled state, user workload can be reduced and convenience can be improved, although the mobile terminal 6 may inadvertently connect automatically to an unintended device.

Therefore, the image forming apparatus 102 can meet either a user demand for maintaining security or a user demand for reducing user workload to improve convenience.

In the other respects, the printing system 101 according to the second embodiment can achieve the same operational effects as the printing system 1 according to the first embodiment.

### [3. Other embodiments]

In the first embodiment described above, the image forming apparatus 2 has been described with respect to the case in which the network interface name of the virtual network interface used for Wi-Fi Direct is set to "p2p0." The present invention is not limited to this, and the image forming apparatus 2 may use various other names as the network interface name of the virtual network interface used for Wi-Fi Direct.

Further, in the second embodiment described above, the case has been described in which the automatic connection disabled state and the automatic connection enabled state are switched in response to a user operation on the display operation unit 16 of the image forming apparatus 102. The present invention is not limited to this, and the automatic connection disabled state and the automatic connection enabled state in the image forming apparatus 102 may be switched by transmitting an instruction from the mobile terminal 6 to the image forming apparatus 102, for example.

Furthermore, in the embodiments described above, the case has been described in which the mobile terminal 6 is configured with a portable device such as a smartphone. The present invention is not limited to this, and a PC (Personal Computer) may be provided in place of the mobile terminal 6.

Furthermore, in the embodiments described above, the case has been described in which the present invention is applied to the image forming apparatus 2 or 102, which is a printer. The present invention is not limited to this, and the present invention may be applied to other image forming apparatuses having various functions, such as a copying machine, a facsimile machine, or an MFP (Multifunction Peripheral) having the functions of a copying machine and/or a facsimile machine, for example. The present invention may also be applied to various other devices that are Wi-Fi Direct compatible terminals.

Furthermore, the present invention is not limited to the above-described embodiments. That is, the scope of the present invention also extends to an embodiment in which some or all of the above-described embodiments are optionally combined. Moreover, the present invention also encompasses an embodiment in which a part of the configuration described in any of the above-described embodiments is replaced or applied to another part of the configuration of any of the above-described embodiments, or an embodiment in which a part of the configuration is added to any of the embodiments.

Furthermore, in the first embodiment described above, the case has been described in which the image forming apparatus 2 is configured with the initialization processing unit 32 as a generation unit and the Wi-Fi communication unit 42 as a transmission unit. The present invention is not limited to this, and the image forming apparatus may be configured with a generation unit having various other configurations, and the transmission unit.

The present disclosure can also be applied to an image forming apparatus capable of communicating with an external terminal using the Wi-Fi Direct function.

### DESCRIPTION OF REFERENCE CHARACTERS

1, 101 printing system, 2, 102 image forming apparatus, 4 management server, 6 mobile terminal (terminal), 10 CPU, 12 ROM, 14 RAM, 16 display operation unit, 18 printing unit, 20 storage, 21 device settings, 22 Wi-Fi unit, 30, 130 control unit, 32 initialization processing unit (generation unit), 34 device setting management unit, 36 print processing unit, 38 input processing unit, 40 display processing unit, 42 Wi-Fi communication unit (transmission unit), 44 data analysis unit, TB1a, TB1b index table.

## Claims

1. An image forming apparatus (2, 102) capable of wirelessly communicating with a terminal (6) via a first wireless path or a second wireless path, the image forming apparatus (2, 102) comprising:
a generation unit (32)
configured to generate first device information obtained by excluding, from device information of the image forming apparatus (2, 102), first interface information that is interface information of a network used in first wireless communication that is wireless communication via the first wireless path and not used in second wireless communication that is wireless communication via the second wireless path, when a communication request is received from the terminal (6) in a state in which the second wireless communication is set to be enabled, and
configured to generate second device information that is the device information of the image forming apparatus (2, 102) including the first interface information, when the communication request is received from the terminal (6) in a state in which the second wireless communication via the second wireless path is set to be disabled; and
a transmission unit (42) configured to transmit the first device information or the second device information to the terminal (6).

2. The image forming apparatus (2, 102) according to Claim 1, wherein
the generation unit (32) generates third device information obtained by excluding, from the device information of the image forming apparatus (2, 102), second interface information that is the interface information of the network used in the second wireless communication via the second wireless path, when the communication request is received from the terminal (6) in the state in which the second wireless communication via the second wireless path is set to be disabled.

3. The image forming apparatus (2, 102) according to Claim 1 or 2, wherein
the first wireless path is a communication path based on an infrastructure mode of a wireless LAN, and
the second wireless path is a communication path based on a P2P mode of a wireless LAN.

4. The image forming apparatus (2, 102) according to any one of Claims 1 to 3, wherein the second wireless path is a communication path based on Wi-Fi Direct.

5. The image forming apparatus (2, 102) according to Claim 2, wherein the second interface information is information used for connection in an infrastructure mode of a wireless LAN.

6. The image forming apparatus (2, 102) according to Claim 4, further comprising:
a control unit (30, 130) configured to connect to an external device via Wi-Fi Direct, when a Wi-Fi Direct connection request is received from the external device in a state in which an automatic connection disabled state is set, with causing a display device (16) to display so that whether to permit connection to the external device or not can be selected, and when a Wi-Fi Direct connection request is received from the external device in a state in which an automatic connection enabled state is set, without causing the display device (16) to display whether to permit connection to the external device or not.

7. The image forming apparatus (2, 102) according to Claim 6, wherein when a Wi-Fi Direct connection request is received from the external device in a state in which the automatic connection disabled state is set, the control unit (30, 130) causes the display device (16) to display so that whether to permit connection to the external device or not can be selected, and when permission is selected, the control unit connects to the external device via Wi-Fi Direct.
